# EUROPÄISCHE PATENTANMELDUNG

(11) **EP 3 486 805 A1**
(43) Veröffentlichungstag der Anmeldung: **22.05.2019**
(21) Anmeldenummer: 18208965.6
(22) Anmeldetag: 04.08.2012
(51) Int. Cl.: G06F 16/9032

(54) **VERFAHREN ZUM BEDIENEN EINER ELEKTRONISCHEN EINRICHTUNG ODER EINER APPLIKATION UND ENTSPRECHENDE VORRICHTUNG**

(30) Priorität: 18.08.2011 DE 102011110978
(62) Teilanmeldung aus: 12746027.7
(71) Anmelder: VOLKSWAGEN AKTIENGESELLSCHAFT, 38440 Wolfsburg (DE)
(72) Erfinder: Wäller, Christoph, 38106 Braunschweig (DE); Czelnik, Mark Peter, 38444 Wolfsburg (DE); Bendewald, Lennart, 38442 Wolfsburg (DE); Joachim, Manuel, 38110 Braunschweig (DE); Ablaßmeier, Markus, 84061 Ergoldsbach (DE); Mischke, Michael, 10829 Berlin (DE)

(57) **Zusammenfassung**

Es werden Verfahren zum Bedienen elektronischer Geräte sowie entsprechend eingerichtete elektronische Geräte bereitgestellt, bei welchen eine Eingabe mindestens eines Buchstabens unabhängig von einer Eingabeaufforderung erfasst wird und eine Datenmenge (52) auf einem Bildschirm des elektronischen Geräts in Abhängigkeit von dem erfassten Buchstaben (51) angezeigt wird. Die Eingabe kann dabei beispielsweise handschriftlich oder durch Spracheingabe erfolgen.

## Beschreibung

Die vorliegende Erfindung betrifft Verfahren zum Bedienen elektronischer Einrichtungen und/oder Applikationen sowie entsprechende Vorrichtungen, insbesondere in einem Fahrzeug wie beispielsweise einem Kraftfahrzeug. Die vorliegende Erfindung betrifft ferner entsprechend ausgerüstete Fahrzeuge.

Die für einen Fahrer eines Kraftfahrzeugs abrufbare Menge an Daten hat in den letzten Jahren stetig zugenommen. Beispielsweise können über ein als Bedieneinrichtung eingerichtete elektronische Einrichtung eines Kraftfahrzeuges größere Datenmengen für Audio- oder Videowiedergabe oder für Navigationszwecke abrufbar und entsprechende Applikationen steuerbar sein, wobei auch Medien oder Kontaktdaten aus Internetbasierten Diensten eingebunden werden können. Daher ist es nötig, Bedienverfahren und Nutzerschnittstellen bereitzustellen, mit welchem auch ein einfacher Zugriff auf derartige Daten möglich ist, beispielsweise ein gewünschtes Musikstück oder ein gewünschtes Navigationsziel ausgewählt werden kann.

Insbesondere in einem Kraftfahrzeug ist dabei wünschenswert, dass eine derartige Bedienung möglichst einfach gehalten und effizient ist, um eine Ablenkung eines Fahrers durch die Bedienung von Einrichtungen und/oder Applikationen, beispielsweise über eine Bedieneinrichtung wie einem Infotainmentsystem eines Fahrzeugs, möglichst gering zu halten.

Aus der DE 100 42 983 B4 ist es beispielsweise bekannt, alphanumerische Zeichen in ein Navigationssystem einzugeben, um einen Zielort zu bestimmen. Ein solches Verfahren für ein Navigationssystem ist auch aus der DE 10 2008 049 636 A1 bekannt.

Aus der US 2003/0093419 A1 ist ein System bekannt, bei welchem ein Benutzer Informationen durch Spracheingaben oder durch Betätigen eines Touchscreens eingeben kann.

Es ist eine Aufgabe der vorliegenden Erfindung, Verfahren zum Bedienen einer elektronischen Einrichtung und/oder einer Applikation sowie entsprechend eingerichtete Vorrichtungen bereitzustellen, wodurch eine Bedienbarkeit des Geräts erleichtert wird und welche insbesondere zum Einsatz in einem Fahrzeug geeignet sind.

Diese Aufgabe wird gelöst durch ein Verfahren gemäß Anspruch 1 und eine Vorrichtung gemäß Anspruch 13. Die Unteransprüche definieren weitere Ausführungsbeispiele.

Ein erfindungsgemäßes Verfahren umfasst ein Erfassen einer Eingabe mindestens eines Zeichens, beispielsweise eines Buchstabens, einer Ziffer oder eines Symbols unabhängig von einer Eingabeaufforderung und ein Anzeigen einer Datenmenge, z.B. einer Liste auf einer Anzeigeeinrichtung, z.B. einem Bildschirm, in Abhängigkeit von dem mindestens einen Zeichen.

Indem auf diese Weise Eingaben unabhängig von Eingabeaufforderungen erfasst werden, kann eine Bedienung des elektronischen Geräts durch Eingabe von Zeichen erfolgen, ohne dass ein Bediener auf Eingabeaufforderungen, beispielsweise Eingabefelder, warten muss oder Aktionen betätigen muss, um derartige Eingabeaufforderungen zu erzeugen. Auf diese Weise wird die Bedienung des elektronischen Gerätes vereinfacht.

Bevorzugt kann die Eingabe des mindestens einen Zeichens wahlweise über mindestens zwei verschiedene Eingabemodalitäten erfolgen, beispielsweise durch eine Spracheingabe oder durch eine handschriftliche Eingabe auf einem berührungsempfindlichen Bildschirm, auch als Touchscreen bezeichnet, oder einem anderen berührungsempfindlichen Element, beispielsweise einem Touchpad. Dies ermöglicht eine große Flexibilität.

Bevorzugt ist das Anzeigen der Datenmenge unabhängig davon, mit welcher Eingabemodalität die Eingabe des Zeichens erfolgte. In anderen Worten, werden bei derartigen Ausführungsbeispielen die verschiedenen Eingabemodalitäten gleich behandelt, sodass es für einen Benutzer keinen Unterschied macht, wie er das mindestens eine Zeichen auswählt.

Das Anzeigen der Datenmenge umfasst bei manchen Ausführungsbeispielen ein Modifizieren einer bereits angezeigten Datenmenge auf Basis des mindestens einen Zeichens. Beispielsweise kann die zunächst angezeigte Datenmenge auf Basis des mindestens einen Zeichens verkleinert werden, sodass abhängig von dem mindestens einen Zeichen nur noch manche Elemente der zunächst angezeigten Datenmenge angezeigt werden, oder ein angezeigter Ausschnitt der Datenmenge kann in Abhängigkeit von dem mindestens einen Zeichen verändert werden. Bei anderen Ausführungsbeispielen wird durch die Eingabe des mindestens einen Zeichens eine Suche über alle oder einen Teil der in dem elektronischen Gerät vorhandenen oder mit diesen verknüpften Daten durchgeführt, und die Datenmenge beinhaltet ein Ergebnis der Suche.

Umfasst die angezeigte Datenmenge nur einen Eintrag, kann bei manchen Ausführungsbeispielen automatisch eine mit dem Eintrag verknüpfte Funktion ausgeführt werden, ansonsten kann ein Eintrag aus der Datenmenge zur Ausführung einer Funktion ausgewählt werden, beispielsweise durch Eingabe und Erfassen weiterer Zeichen oder durch Auswahl mittels eines Bedienelements des elektronischen Geräts.

Eine entsprechende Vorrichtung umfasst eine Erfassungseinrichtung zum Erfassen einer Eingabe mindestens eines Zeichens unabhängig von einer Eingabeaufforderung, eine Anzeigeeinrichtung und eine Steuereinrichtung, welche eingerichtet ist, die Anzeigeeinrichtung zum Anzeigen einer Datenmenge in Abhängigkeit von dem mindestens einen Buchstaben anzusteuern. Die Erfassungseinrichtung kann insbesondere ein Mikrophon zum Erfassen einer Spracheingabe des mindestens einen Zeichens aufweisen. Zudem kann die Anzeigeeinrichtung einen berührungsempfindlichen Bildschirm umfassen, welcher somit als Teil der Erfassungseinrichtung zum Erfassen einer handschriftlichen Eingabe dient, und/oder die Erfassungseinrichtung kann einen weiteren Bildschirm, welcher berührungsempfindlich ist, oder ein anderes berührungsempfindliches Element aufweisen.

Die Vorrichtung kann insbesondere eingerichtet sein, eines oder mehrer der oben beschriebenen Verfahren durchzuführen.

Die Erfindung wird nachfolgend unter Bezugnahme auf die beigefügten Zeichnungen anhand von Ausführungsbeispielen näher erläutert. Es zeigen:
Fig. 1 ein Cockpit eines Fahrzeuges, welches mit einer Vorrichtung gemäß einem Ausführungsbeispiel der Erfindung ausgestattet ist,
Fig. 2 ein Blockdiagramm eines Ausführungsbeispiels einer erfindungsgemäßen Vorrichtung,
Fig. 3-8 verschiedene Beispiele für Eingaben von Buchstaben gemäß Ausführungsbeispielen der Erfindung, und
Fig. 9 ein Flussdiagramm zur Veranschaulichung eines Ausführungsbeispiels eines erfindungsgemäßen Verfahrens.

Im Folgenden werden verschiedene Ausführungsbeispiele der Erfindung näher erläutert. Es ist zu bemerken, dass Merkmale verschiedener Ausführungsbeispiele miteinander kombiniert werden können, sofern nichts anderes angegeben ist. Auf der anderen Seite ist eine Beschreibung eines Ausführungsbeispiels mit einer Vielzahl von Merkmalen nicht dahingehend auszulegen, dass alle diese Merkmale zur Ausführung der Erfindung nötig sind, da andere Ausführungsbeispiele weniger Merkmale oder alternative Merkmale aufweisen können.

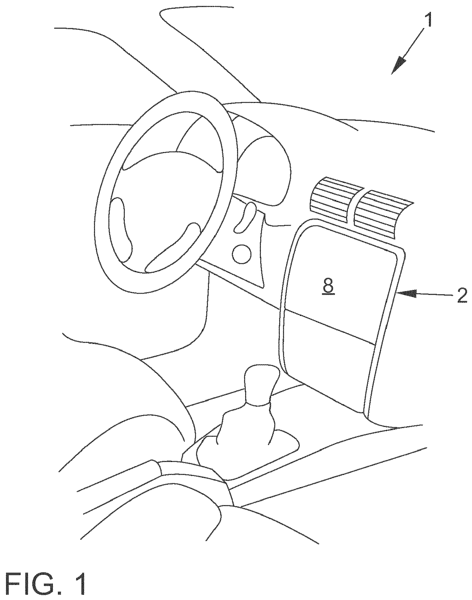

In Fig. 1 ist ein Cockpit eines Fahrzeugs 1 dargestellt, welches mit einer Vorrichtung 2 gemäß einem Ausführungsbeispiel der Erfindung ausgestattet ist. Die Vorrichtung 2 dient dabei insbesondere zur Bedienung von Funktionen des Fahrzeugs 1. Beispielsweise können mit der Vorrichtung 2 ein Radio, ein Navigationssystem, eine Wiedergabe von gespeicherten Musikstücken und/oder eine Klimaanlage, andere elektronische Einrichtungen oder andere Komfortfunktionen oder Applikationen des Fahrzeugs 1 gesteuert werden. Derartige Vorrichtungen sind auch als Infotainmentsysteme bekannt. Die Vorrichtung 2 weist im Bereich einer Mittelkonsole des Fahrzeugs 1 eine Anzeigeeinrichtung in Form eines berührungsempfindlichen Bildschirms 8, auch als Touchscreen bezeichnet, auf, wobei dieser Bildschirm 8 sowohl von einem Fahrer des Fahrzeugs 1 als auch von einem Beifahrer des Fahrzeugs 1 gut eingesehen und bedient werden kann. Unterhalb des Bildschirms 8 können zudem mechanische Bedienelemente, beispielsweise Tasten, Drehregler oder Kombinationen hiervon wie beispielsweise Drückdrehregler, angeordnet sein.

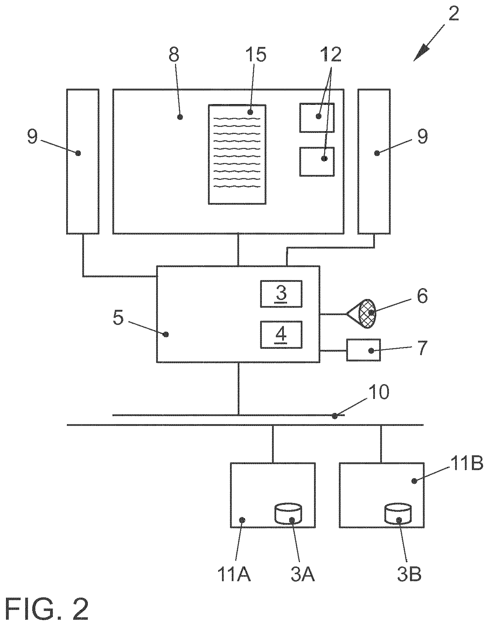

In Fig. 2 ist schematisch eine mögliche Ausführung der Vorrichtung 2 gemäß einem Ausführungsbeispiel der Erfindung dargestellt. Komponenten der Vorrichtung 2, welche in Fig. 1 nicht dargestellt sind, können dennoch auch bei dem Ausführungsbeispiel der Fig. 1 vorhanden sein und an geeigneter Stelle im Fahrzeug 1, beispielsweise im Cockpit des Fahrzeugs, angeordnet sein.

Die Vorrichtung 2 des Ausführungsbeispiels der Fig. 2 umfasst diverse Mittel und Einrichtungen zum Erfassen von Nutzereingaben, beispielsweise ein Mikrophon 6, welches mit einer Steuereinrichtung 5 verbunden ist, wobei die Steuereinrichtung 5 mittels einer Analyseeinheit 4 zum Verarbeiten und Analysieren von über das Mikrophon 6 eingegebener Sprache eingerichtet ist. Zudem ist der berührungsempfindliche Bildschirm 8 zum Erfassen von Eingaben durch Berührungen vorgesehen. Des weiteren kann ein weiterer berührungsempfindlicher Bildschirm 7 bereitgestellt sein. Der weitere berührungsempfindliche Bildschirm 7 kann auch ein lösbar mit dem Fahrzeug verbindbares Endgerät mit einer berührungsempfindlichen Oberfläche sein, beispielsweise ein sogenanntes Smartphone oder ein Tabletcomputer. Dieses Endgerät kann beispielsweise in eine dafür vorgesehene Halterung im Fahrzeug eingelegt werden und eine Datenverbindung zu der Steuereinrichtung 5 der Vorrichtung 2 aufbauen, beispielsweise eine drahtlose Verbindung wie eine Bluetooth-Verbindung oder eine drahtgebundene Verbindung. Bei anderen Ausführungsbeispielen kann statt des weiteren berührungsempfindlichen Bildschirms 7 auch ein anderes berührungsempfindliches Element, beispielsweise ein sogenanntes Touchpad, bereitgestellt sein. Wie später näher erläutert werden wird, können auf dem Bildschirm 8 oder 7 insbesondere graphische Objekte 12 sowie Listen 15 dargestellt werden, wobei die Anzeige der Listen in Abhängigkeit von Eingaben eines Benutzers, insbesondere eines Fahrers des Fahrzeugs, erfolgen kann.

Die Steuereinrichtung 5 kann optional mit einem Kamerasystem 9 verbunden sein, welches einen Bereich um den Bildschirm 8 überwacht. Das Kamerasystem 9 kann beispielsweise neben dem Bildschirm 8 oder an geeigneter Stelle im Cockpit oder am Himmel der Fahrgastzelle angeordnet sein und kann insbesondere Gesten berührungslos auch schon vor der Anzeigefläche des Bildschirms erfassen, sodass hiermit eine weitere Eingabemodalität geschaffen wird.

In der Steuereinrichtung 5 ist bei dem dargestellten Ausführungsbeispiel ein Datenspeicher 3 integriert, in welchem verschiedene Informationen abgelegt sein können, beispielsweise Informationen über zur Verfügung stehende Musikstücke oder Informationen bezüglich eines Navigationssystems. Zudem weist die Steuereinrichtung 5 die Analyseeinheit 4 auf, welche insbesondere Eingaben eines Benutzers analysiert und davon abhängig Funktionen in dem Fahrzeug auslösen kann, beispielsweise eine Darstellung auf dem Bildschirm 8 ändern kann oder andere Funktionen, beispielsweise eine Wiedergabe von Musikstücken, auslösen kann.

Die Steuereinrichtung 5 ist weiterhin mit einem Datenbus 10 in dem Fahrzeug 1 verbunden, über den sie mit anderen Funktionseinrichtungen 11A, 11B im Fahrzeug 1 kommunizieren kann, wobei die Funktionseinrichtungen 11A, 11B Datenspeicher 3A bzw.3B aufweisen. Derartige Funktionseinrichtungen können beispielsweise ein Navigationssystem, eine Musikwiedergabeeinrichtung, oder eine Einrichtung zum Einstellen und Bedienen verschiedener Funktionen im Fahrzeug 1 umfassen. In den Datenspeichern 3A, 3B können dann entsprechend beispielsweise Kartendaten im Falle eines Navigationssystems oder Musikdaten wie MP3-Dateien im Falle eines Musikwiedergabesystems abgelegt sein. Informationen darüber, welche Daten sich in den Datenspeichern 3A, 3B befinden, können in dem Speicher 3 der Steuereinrichtung 5 abgelegt sein. Bei anderen Ausführungsbeispielen greift die Steuereinrichtung 5 direkt auf die Funktionseinrichtungen 11A, 11B zu, um derartige Informationen zu erlangen.

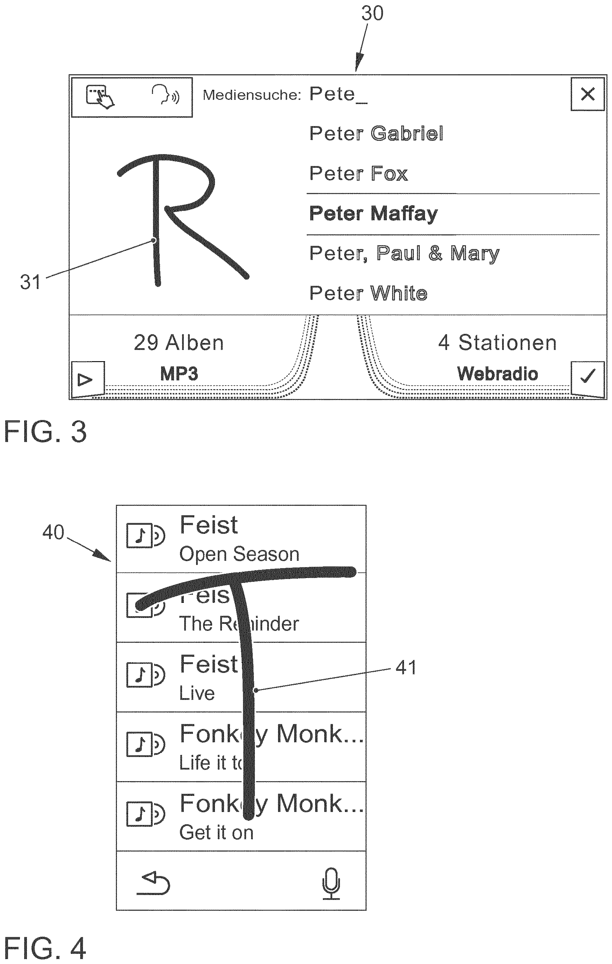

Wie im Folgenden anhand von Beispielen näher erläutert werden wird, stellt die Vorrichtung 2 insbesondere Möglichkeiten bereit, mit welchem ein Bediener auf einfache Weise Inhalte, beispielsweise in dem Speicher 3 oder in dem Datenspeichern 3A und 3B abgelegte Inhalte, auffinden kann oder aus einer größeren Zahl von Inhalten auswählen kann. Hierzu können insbesondere zur Auswahl in Listen Zeichen, beispielsweise Buchstaben, Ziffern oder Symbole in Handschrift über den Bildschirm 8 oder den Bildschirm 7 eingegeben werden oder auch als Sprache über das Mikrofon 6 eingegeben werden. Verschiedene Beispiele hierfür werden im Folgenden unter Bezugnahme auf die Figuren 3 bis 8 erläutert.

In Fig. 3 ist ein Beispiel einer Anzeige auf dem berührungsempfindlichen Bildschirm 8 dargestellt, bei welcher es beispielsweise um die Auswahl eines Musikinterpreten geht. In einer Liste 30 sind verschiedene Interpreten angezeigt, welche mit Pete anfangen. Ein Bediener kann dann handschriftlich einen weiteren Buchstaben, beispielsweise ein "R" 31, eingeben, worauf die Liste 30 weiter konkretisiert werden kann. Beispiele für Konkretisierungen derartiger Listen werden später erläutert. Eine derartige Funktion kann grundsätzlich bereitgestellt werden, wenn Listen angezeigt werden, ohne dass eine separate Eingabeanforderung gegeben wird oder von einem Bediener angefordert werden muss.

Insbesondere, bei kleineren Bildschirmen wie in Fig. 4 dargestellt kann das Schreiben eines Buchstabens 41 dabei direkt auf einer Liste 40 erfolgen. Derartige kleinere Bildschirme können beispielsweise Bildschirme wie der Bildschirm 7 aus Fig. 2 sein, welche einem mobilen Endgerät wie beispielsweise einem Smartphone zuzuordnen sind. Im Beispiel der Fig. 4 wird als Zeichen oder Buchstabe T angegeben. Ein derartiges Schreiben direkt auf Listen oder in anderer Form dargestellten Datenmengen kann auch vorteilhaft sein, wenn in anderen Bereichen eines Bildschirms andere Daten dargestellt werden, sodass eine Zuordnung des Zeichens zu einer Suche in der Liste dann problemlos möglich ist. Beim Schreiben direkt auf eine Liste kann beispielsweise die Analyseeinheit 4 der Fig. 2 eingerichtet sein, zwischen dem Schreiben eines Buchstabens und anderen Bediengesten, beispielsweise einem Scrollen einer Liste, zu unterscheiden. Dies kann beispielsweise dadurch geschehen, dass am Rand der Liste ein Bereich für derartige weitere Gesten reserviert wird, oder dass eine Eingabe als weitere Geste interpretiert wird, wenn sie keinem Buchstaben zuzuordnen ist.

Es ist zu bemerken, dass zusätzlich zur Bedienung oder Konkretisierung der Listen durch Zeichen die Liste auch mit anderen Bedienelementen, beispielsweise einem eingangs erwähnten Drückdrehelement, bedient werden.

Bei weiteren Ausführungsbeispielen kann bei Eingabe eines Zeichens, wie z.B. eines Buchstabens, beispielsweise einer handschriftlichen Eingabe, falls keine Liste oder andere Datenmenge angezeigt wird, auf Basis des Buchstabens eine Suche gestartet werden und dann eine entsprechende Datenmenge beispielsweise in einer Liste angezeigt werden. Die Suche kann dabei eine globale Suche über alle Inhalte des elektronischen Geräts und/oder hiermit verknüpfte Funktionseinrichtungen oder eine Suche nur in einem Teil der Inhalte sein. Welche Art der Suche durchgeführt wird, kann kontextabhängig sein. Wird beispielsweise auf einem Bildschirm wie dem Bildschirm 8 eine Bedienoberfläche für Musikwiedergabe angezeigt, kann eine Suche nur über musikbezogene Daten, beispielsweise eine Suche nach Interpreten und/oder Musikstücken, durchgeführt werden. Ist eine Bildschirmdarstellung hingegen keiner spezifischen Anwendung zuzuordnen (beispielsweise eine Darstellung eines Menüs, mit welcher verschiedene Anwendungen wie Musikwiedergabe, Navigation oder Fahrzeugeinstellungen aufgerufen werden können), kann beispielsweise eine globale Suche über sämtliche Inhalte durchgeführt werden. Eine derartige Suche kann insbesondere ausgelöst werden, wenn auf eine freie Fläche auf dem Bildschirm geschrieben wird.

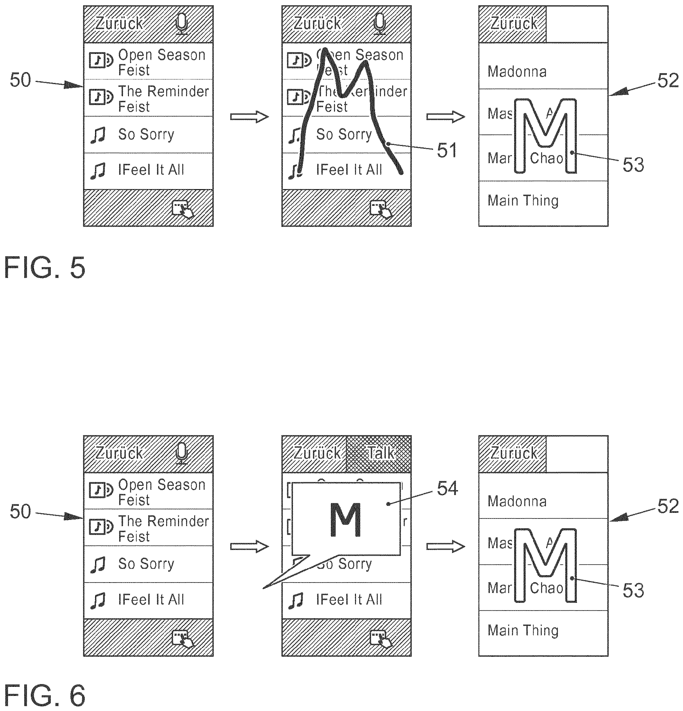

Unter Bezugname auf die Fig. 3 und 4 wurde eine Bedienung durch handschriftliche Zeicheneingabe erläutert. Zusätzlich oder alternativ kann eine Eingabe von Zeichen auch durch Sprechen des Zeichens erfolgen, beispielsweise über das in Fig. 2 dargestellte Mikrophon 6. Bevorzugt sind beide Möglichkeiten vorgesehen, sodass unterschiedliche Modalitäten zur Zeicheneingabe zur Verfügung stehen. Dabei werden bevorzugt handschriftlich eingegebene Zeichen und durch Sprechen eingegebene Zeichen gleich behandelt, d.h. sie lösen die gleichen Reaktionen aus. Dies wird nun unter Bezugnahme auf Fig. 5 und 6 erläutert.

In Fig. 5 ist links eine Liste 50 dargestellt. Durch handschriftliche Eingabe eines Zeichens 51, hier ein "M" wird die Liste zur Liste 52 modifiziert, in diesem Fall nur Listenelemente mit dem Anfangsbuchstaben "M" angezeigt. Zudem kann das erkannte Zeichen, in diesem Fall "M" als Buchstabe 53 auf der Liste kurzzeitig angezeigt werden, beispielsweise in transparenter Form.

In Fig. 6 ist im Wesentlichen der gleiche Vorgang dargestellt, nur dass hier statt einer handschriftlichen Eingabe eines Buchstabens 51 eine Spracheingabe eines Zeichens 54, ebenfalls eines "M", erfolgt. Ansonsten ist die Reaktion des Systems wie in Fig. 6 dargestellt genau so wie bei einer handschriftlichen Eingabe.

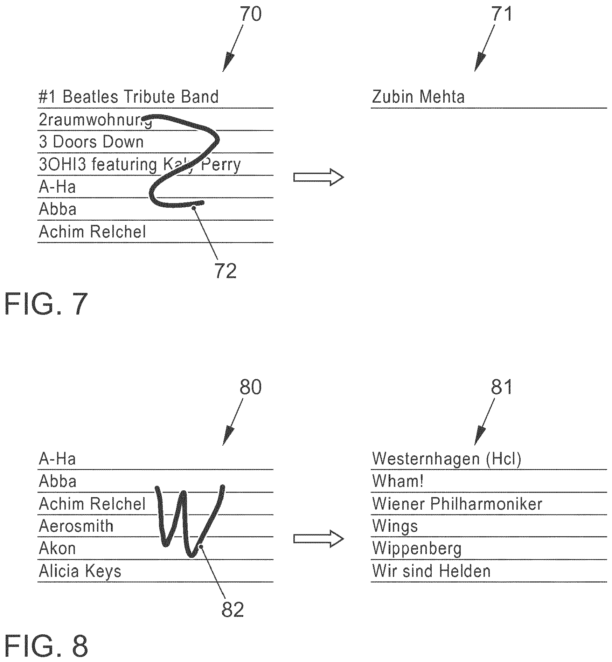

Durch die Eingabe eines Zeichens, beispielsweise durch Schreiben eines Buchstabens auf die Liste oder durch eine Spracheingabe, kann eine Liste auf verschiedene Art und Weise modifiziert werden. Zwei Möglichkeiten hierfür sind in den Fig. 7 und 8 dargestellt.

Bei dem Beispiel der Fig. 7 wird auf eine Liste 70, welche beispielsweise verschiedene Interpreten zeigt, ein Buchstabe 72, in diesem Fall ein "Z", geschrieben. Als Reaktion hierfür wird die Liste nunmehr als Liste 71 mit denjenigen Elementen angezeigt, welche mit "Z" beginnen, in diesem Fall nur noch ein einziges Element. Der Listeninhalt verändert sich also bei dieser Vorgehensweise.

Bei dem Beispiel der Fig. 8 wird wiederum eine Liste 80 mit verschiedenen Interpreten angezeigt. Bei Eingabe eines Buchstabens 82, in diesem Fall ein "W", wird die Liste verschoben ("gescrollt"), in diesem Beispiel ändert sich dann die Anzeige wie durch ein Bezugszeichen 81 angedeutet, d.h. der Beginn des angezeigten Abschnitts der Liste entspricht dem ersten Eintrag, welcher mit "W" beginnt. Der Inhalt der Liste selbst wird bei dieser Vorgehensweise nicht verändert, aber die angezeigten Listenpositionen ändern sich. Die Möglichkeit der Fig. 8 eignet sich dabei insbesondere für sortierte Listen.

Zu bemerken ist, dass die Eingabe nicht auf ein einziges Zeichen beschränkt sein muss, sondern auch mehrere Zeichen, z.B. Buchstaben, hintereinander angegeben werden können, beispielsweise als Wort oder Wortteil. Bei ausreichend Platz auf einem berührungsempfindlichen Bildschirm kann dies als handschriftliche Eingabe nebeneinander erfolgen, oder es können mehrere Zeichen, z.B. als Wort oder Wortteil, hintereinander gesprochen werden. Bei wenig Platz, beispielsweise einer Eingabe auf einem Smartphone, können die Zeichen sukzessive übereinander geschrieben werden. Dabei kann die Auswerteeinheit 4 eingerichtet sein, mehrere hintereinander eingegebene Zeichen als zusammengehörig zu betrachten, wenn zwischen den Eingabe nicht mehr als eine vorgegebene Zeitspanne verstreicht.

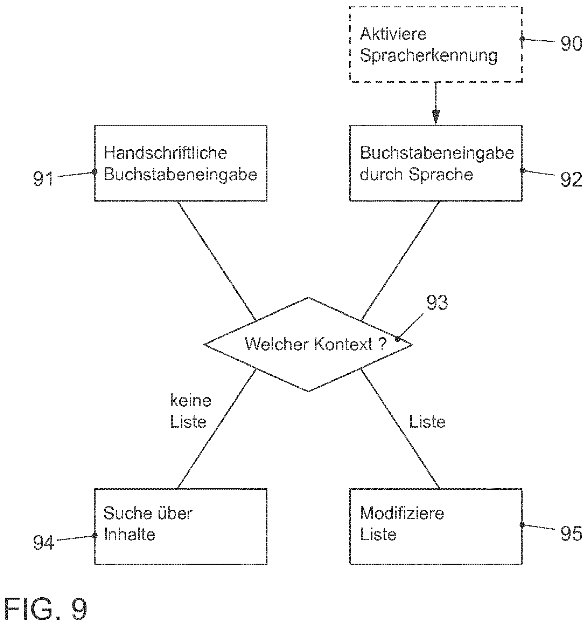

In Fig. 9 ist ein Flussdiagramm dargestellt, welches ein Ausführungsbeispiel eines erfindungsgemäßen Verfahrens veranschaulicht. Das Verfahren der Fig. 9 kann beispielsweise in der Vorrichtung 2 der Fig. 1 und 2 implementiert sein, kann jedoch auch unabhängig hiervon verwendet werden.

In Schritt 91 erfolgt eine handschriftliche Eingabe von einem oder mehreren Zeichen. Alternativ kann in Schritt 92 eine Eingabe von einem oder mehreren Zeichen durch Sprache erfolgen. Hierzu kann optional in einem vorhergehenden Schritt 90 eine Spracherkennung aktiviert werden, beispielsweise durch eine Handlung eines Benutzers, um zu verhindern, dass beispielsweise normale Gespräche in einem Fahrzeug als Spracheingabe bewertet werden.

Unabhängig davon, auf welche Art die Eingabe von ein oder mehreren Buchstaben erfolgt, wird das Verfahren in gleicher Weise in Schritt 93 fortgesetzt, in welchem überprüft wird, in welchem Kontext die Zeicheneingabe erfolgte. Erfolgte die Zeicheneingabe auf einer Liste, wird in Schritt 95 die Liste modifiziert, beispielsweise wie unter Bezugnahme auf Fig. 7 und 8 erläutert. Falls die Zeicheneingabe nicht auf einer Liste erzeugt wurde und/oder keine Liste angezeigt wurde, wird eine Suche über Inhalte in Schritt 94 durchgeführt und das Ergebnis der Suche beispielsweise als Liste angezeigt, wobei abhängig von dem Kontext die Suche global oder nur über einen Teil von zur Verfügung stehenden Inhalten erfolgen kann, wie bereits weiter oben erläutert.

Zumindest einige mögliche Ausführungsbeispiele sind im Folgenden angegeben:
Klausel 1. Verfahren zum Bedienen mindestens einer elektronischen Einrichtung und/oder Applikation umfassend:
   Erfassen einer Eingabe mindestens eines Zeichens unabhängig von einer Eingabeaufforderung, und
   Anzeigen einer Datenmenge auf einer Anzeigeeinrichtung in Abhängigkeit von dem erfassten mindestens einen Buchstabens.
Klausel 2. Verfahren nach Klausel 1, wobei das Erfassen einer Eingabe ein Erfassen einer Eingabe durch Sprache und/oder ein Erfassen einer handschriftlichen Eingabe auf einem berührungsempfindlichen Element umfasst.
Klausel 3. Verfahren nach Klausel 2, wobei das berührungsempfindliche Element ausgewählt ist aus der Gruppe umfassend die Anzeigeeinrichtung und ein Touchpad.
Klausel 4. Verfahren nach einer der Klauseln 1-3, wobei das Erfassen der Eingabe des mindestens einen Zeichens wahlweise über mindestens zwei verschiedene Eingabemodalitäten erfolgen kann.
Klausel 5. Verfahren nach Klausel 4, wobei das Anzeigen unabhängig von der verwendeten Eingabemodalität erfolgt.
Klausel 6. Verfahren nach einer der Klauseln 1-5, wobei die Datenmenge als Liste angezeigt wird.
Klausel 7. Verfahren nach einer der Klauseln 1-6, weiter umfassend:
   Anzeigen einer vorhergehenden Datenmenge auf der Anzeigeeinrichtung vor dem Erfassen der Eingabe des mindestens einen Buchstabens,
   wobei das Anzeigen der Datenmenge durch Modifizieren der Anzeige der vorhergehenden Datenmenge erfolgt.
Klausel 8. Verfahren nach Klausel 7, wobei die Anzeigeeinrichtung berührungsempfindlich ist, und wobei das Erfassen der Eingabe des mindestens einen Zeichens ein Erfassen einer handschriftlichen Eingabe des mindestens einen Zeichens auf der Anzeigeeinrichtung am Ort der Anzeige der vorhergehenden Datenmenge umfasst.
Klausel 9. Verfahren nach Klausel 7 oder 8, wobei das Modifizieren der vorhergehenden Datenmenge eine Reduzierung der Anzahl der Elemente der vorhergehenden Datenmenge in Abhängigkeit von dem mindestens ein Zeichen umfasst.
Klausel 10. Verfahren nach Klausel 7 oder 8, wobei die Modifizierung der vorhergehenden Datenmenge eine Änderung eines angezeigten Ausschnitts der vorhergehenden Datenmenge umfasst.
Klausel 11. Verfahren nach einer der Klauseln 1-6, wobei das Anzeigen der Datenmenge ein Suchen von Daten in einem Datenspeicher in Abhängigkeit von dem mindestens einen Zeichen und ein Erzeugen der Datenmenge in Abhängigkeit von den gefundenen Daten umfasst.
Klausel 12. Verfahren nach einer der Klauseln 1-11, wobei das mindestens eine Zeichen mindestens einen Buchstaben, mindestens eine Ziffer und/oder mindestens ein Symbol umfasst.
Klausel 13. Vorrichtung umfassend:
   eine Erfassungseinrichtung zum Erfassen einer Eingabe mindestens eines Zeichens unabhängig von einer Eingabeaufforderung,
   eine Anzeigeeinrichtung, und
   eine Steuereinrichtung, welche eingerichtet ist, die Anzeigeeinrichtung zur Anzeige einer Datenmenge in Abhängigkeit von dem mindestens einen Buchstaben anzusteuern.
Klausel 14. Vorrichtung nach Klausel 13, wobei die Vorrichtung zur Durchführung des Verfahrens nach einer der Klauseln 1-12 eingerichtet ist.
Klausel 15. Fahrzeug mit einer Vorrichtung nach Klausel 13 oder Klausel 14.

Es ist zu bemerken, dass die oben dargestellten Ausführungsbeispiele nur zur Erläuterung dienen und nicht als einschränkend auszulegen sind. Insbesondere sind verschiedene Modifikationen und Abwandlungen der oben beschriebenen Ausführungsbeispiele möglich. Beispielsweise können statt Listen auch andere Arten der Anzeige von Datenmengen verwendet werden, beispielsweise in Form von Piktogrammen, welche einzelne Daten repräsentieren. Die verschiedenen Daten, beispielsweise Elemente der Listen oder Piktogramme, müssen nicht notwendigerweise untereinander angeordnet sein wie in den Figuren dargestellt.

Wenn durch Zeicheneingabe die Anzahl der Elemente einer Liste auf eins reduziert werden, kann bei manchen Ausführungsbeispielen ohne weitere Rückfrage mit einem Bediener eine mit dem verbliebenen Element verknüpfte Funktion ausgeführt werden, beispielsweise ein entsprechendes Musikstück gespielt werden oder eine Navigation zu einem entsprechendem Ziel gestartet werden.

Auch wenn die oben beschriebenen Ausführungsbeispiele sich auf einen Einsatz der Erfindung in einem Fahrzeug beziehen, kann die Erfindung generell für elektronische Geräte angewendet werden, insbesondere für elektronische Geräte, welche einen berührungsempfindlichen Bildschirm oder anderes berührungsempfindliches Element und/oder ein Mikrophon aufweisen.

## Patentansprüche

1. Fahrzeug (1) mit einem Cockpit mit einem elektronischen Gerät (2) zur Bedienung von Funktionen des Fahrzeuges (1), wobei das elektronische Gerät umfasst:
eine Anzeigeeinrichtung (7, 8) im Bereich einer Mittelkonsole des Fahrzeugs (1), wobei die Anzeigeeinrichtung (7, 8) berührungsempfindlich ist,
eine Steuereinrichtung, welche eingerichtet ist, die Anzeigeeinrichtung (7, 8) zum Anzeigen einer vorhergehenden Datenmenge anzusteuern,
eine Erfassungseinrichtung (7, 8, 4) umfassend die Anzeigeeinrichtung (7, 8), eingerichtet zum Erfassen einer Eingabe mindestens eines Zeichens, wobei das Erfassen der Eingabe des mindestens einen Zeichens ein Erfassen einer handschriftlichen Eingabe des mindestens einen Zeichens auf der Anzeigeeinrichtung (7, 8) umfasst,
wobei die Steuereinrichtung (5) eingerichtet ist, die Anzeigeeinrichtung (8) zur Anzeige einer Datenmenge in Abhängigkeit von dem mindestens einen Zeichen anzusteuern, wobei das Anzeigen der Datenmenge durch Modifizieren der Anzeige der vorhergehenden Datenmenge erfolgt, wobei
das Erfassen der Eingabe des mindestens einen Zeichens unabhängig von einer Eingabeaufforderung erfolgt und
das Erfassen der Eingabe des mindestens einen Zeichens ein Erfassen einer handschriftlichen Eingabe des mindestens einen Zeichens (31, 41, 51, 82, 72) auf der Anzeigeeinrichtung (7, 8) am Ort der Anzeige der vorhergehenden Datenmenge umfasst,
wobei das elektronische Gerät (2) weiter eingerichtet ist, die Anzeigeeinrichtung (7, 8) zum kurzzeitigen Anzeigen eines erkannten Zeichens (53) auf der Datenmenge anzusteuern.

2. Fahrzeug (1) nach Anspruch 1, wobei das elektronische Gerät (2) zum kurzzeitigen Anzeigen des erkannten Zeichens eingerichtet ist,
das Zeichen basierend auf dem Erfassen der Eingabe zu erkennen, um das erkannte Zeichen zu erhalten, und
die Anzeigeeinrichtung zum kurzzeitigen Anzeigen des erkannten Zeichens auf der Datenmenge anzusteuern, wobei die Darstellung des erkannten Zeichens (53) auf der Datenmenge von der handschriftlichen Eingabe des mindestens einen Zeichens (31, 41, 51, 82, 72) verschieden ist.

3. Fahrzeug (1) nach Anspruch 2, **dadurch gekennzeichnet, dass**
das Erfassen der handschriftlichen Eingabe ein Darstellen der handschriftlichen Eingabe auf der Anzeigeeinrichtung (7,8) umfasst und
dass die Darstellung des erkannten Zeichens (53) auf der Datenmenge nach dem Darstellen der handschriftlichen Eingabe auf der Anzeigeeinrichtung (7,8) erfolgt.

4. Fahrzeug (1) nach einem der vorherigen Ansprüche, wobei die Funktionen des Fahrzeuges (1) mindestens eines der folgenden Elemente umfasst: eine Klimaanlagenfunktion, andere elektronische Einrichtungen des Fahrzeugs, andere Komfortfunktionen des Fahrzeugs.

5. Fahrzeug (1) nach einem der vorherigen Ansprüche, wobei das elektronische Gerät (2) weiter eingerichtet ist, die Anzeigeeinrichtung (7, 8) zum kurzzeitigen Anzeigen des erkannten Zeichens (53) auf der Datenmenge in transparenter Form anzusteuern.

6. Fahrzeug (1) nach einem der vorherigen Ansprüche, wobei das elektronische Gerät (2) weiter eingerichtet ist, die Anzeigeeinrichtung (7, 8) zum Anzeigen der Datenmenge mittels einer ersten Schriftart mit einer ersten Schriftgröße anzusteuern und zum kurzzeitige Anzeigen des erkannten Zeichens mit einer zweiten Schriftart mit einer zweiten Schriftgröße anzusteuern, wobei die zweite Schriftgröße größer als die erste Schriftgröße ist.

7. Fahrzeug (1) nach Anspruch 6, wobei die zweite Schriftgröße mindestens viermal größer als die erste Schriftgröße ist.

8. Fahrzeug (1) nach einem der vorherigen Ansprüche, wobei das Modifizieren der vorhergehenden Datenmenge eine Reduzierung der Anzahl der Elemente der vorhergehenden Datenmenge in Abhängigkeit von dem mindestens einen erkannten Zeichen umfasst, und
wobei die Datenmenge als Liste angezeigt wird, und
wobei, wenn durch das Reduzieren der Anzahl der Elemente der Liste die Anzahl der Elemente einer Liste auf eins reduziert ist, ohne eine weitere Rückfrage mit einem Bediener eine mit einem verbliebenen Element verknüpfte Funktion ausgeführt wird.

9. Fahrzeug (1) nach Anspruch 8, wobei die mit dem verbliebenen Element verknüpfte Funktion eine Funktion aus folgender Liste ist: ein Spielen eines dem verbliebenen Element entsprechenden Musikstücks, ein Starten einer Navigation zu einem dem verbliebenen Element entsprechenden Ziel.

10. Fahrzeug (1) nach einem der vorherigen Ansprüche, wobei das elektronische Gerät (2) eingerichtet ist, die Datenmenge als eine Liste anzuzeigen, und
wobei das elektronische Gerät (2) zum Erfassen der Eingabe direkt auf der Liste eingerichtet ist und/oder
wobei die Liste alphabetisch sortiert ist und wobei das Modifizieren der vorhergehenden Datenmenge eine Änderung eines angezeigten Ausschnitts der vorhergehenden Datenmenge umfasst.

11. Fahrzeug nach Anspruch 10, wobei das elektronische Gerät (2) eingerichtet ist, bei dem Modifizieren der Datenmenge den Inhalt der der Datenmenge nicht zu verändern, aber eine angezeigte Listenposition zu verändern.

12. Fahrzeug (1) nach einem der vorherigen Ansprüche, wobei das Anzeigen der Datenmenge auf der Anzeigeeinrichtung (7, 8) in Abhängigkeit von dem erfassten mindestens einen Zeichen abhängig von einem Kontext erfolgt und das Fahrzeug eine zweite Erfassungseinrichtung (5, 6) umfasst, wobei die Erfassungseinrichtung zum Erfassen der Eingabe des mindestens einen Zeichens mittels handschriftlicher Eingabe eingerichtet ist und wobei die zweite Erfassungseinrichtung eingerichtet ist, die Eingabe des mindestens einen Zeichens mittels Spracheingabe zu erfassen, wobei das elektronische Gerät (2) eingerichtet ist, gleiche Reaktionen für die handschriftliche Eingabe und die gesprochene Eingabe herbeizuführen.

13. Fahrzeug (1) nach Anspruch 12, wobei der Kontext ein globaler Kontext oder ein anwendungsspezifischer Kontext, beispielsweise Musikwiedergabe, ist.

14. Fahrzeug (1) nach einem der Ansprüche 12 oder 13, wobei abhängig von dem Kontext eine Suche in Abhängigkeit von dem erfassten mindestens einen Zeichen global oder nur über einen Teil von zur Verfügung stehenden Inhalten erfolgt.

15. Fahrzeug (1) nach einem der vorherigen Ansprüche, wobei das elektronische Gerät ferner eingerichtet ist zum:
Überwachen eines Bereichs um die Anzeigeeinrichtung (8) mittels eines Kamerasystems (9) und
Erfassen von Gesten ohne eine Berührung der Anzeigeeinrichtung (8).
